# EUROPEAN PATENT SPECIFICATION

(11) **EP 1 384 983 B1**
(45) Date of publication and mention of the grant of the patent: **04.04.2007**
(21) Application number: 03016359.6
(22) Date of filing: 18.07.2003
(51) Int. Cl.: G01M 1/04

(54) **Apparatus for clamping vehicle wheels on a balancing machine**
Vorrichtung zum Einspannen von Fahrzeugrädern in eine Auswuchtmaschine
Appareil de serrage des roues de véhicule sur une machine d'équilibrage

(30) Priority: 19.07.2002 IT mo20020206
(43) Date of publication of application: 28.01.2004
(73) Proprietor: Ferrari, Gino, 42015 Correggio (Reggio Emilia) (IT); Maioli, Franco, 42015 Correggio (Reggio Emilia) (IT)
(72) Inventor: Ferrari, Gino, 42015 Correggio (Reggio Emilia) (IT); Maioli, Franco, 42015 Correggio (Reggio Emilia) (IT)
(74) Representative: Feltrinelli, Secondo Andrea

(56) References cited:
- US-A- 3 636 773
- US-A- 5 074 347

## Description

The object of the present invention is an apparatus comprising a clamping group for clamping vehicle wheels on balancing machines.

In the balancing machines used for balancing the vehicle wheels, after that the pneumatics have been removed and remounted, the balancing shaft is provided with members suitable for clamping the wheels against a vertical flange, before launching the wheel and for detecting the unbalance points and the amount of the unbalances.

The before mentioned shaft is a telescopic shaft, comprising a first fixed portion integrally attached to said vertical flange and a second axially movable portion that is movable in relation to the first portion in such a way that the second portion can be partially inserted into the first portion and extracted from it.

The second movable portion comprises a first zone with a diameter equal to the diameter of the first portion, and a second zone having a smaller diameter than the first portion and that can be inserted into the first portion.

The second portion can be inserted into the first portion for a stroke having a preset amount, equal to the length of the second zone of the second portion, so that when the second zone of the second portion is inserted into the first portion, the first zone of the second portion abuts against the first portion.

The first zone of the second portion is provided with a threading for screwing a clamping cone suitable for engaging with the central hole of the wheel rim.

The second zone of the second portion has a smaller diameter than the first portion, whilst the first zone in provided with an outer diameter substantially equal to that of the first portion.

When a wheel has to be balanced, the balancing shaft is positioned in an extracted configuration, i.e. the second zone is extracted from the first portion, then the shaft is inserted into the central hole of the rim of the wheel to be balanced.

Then the wheel is made to slide on the shaft till it abuts against a vertical flange with which the balancing shaft is provided. After that, the clamping cone is screwed on the first zone of the second portion, the second portion is inserted into the first portion until the first zone of the second portion abuts with the first portion, and the wheel is consequently clamped against the vertical support flange.

After the insertion of the wheel, the operator can rotate the balancing shaft and complete the balancing operations.

To remove the balanced wheel from the balancing shaft, the operating procedure is reversed: that is, the second zone of the second portion is extracted from the first portion, and the clamping cone is unscrewed, thereby completely releasing the wheel, that can then be unthreaded from the shaft.

In known machines, occurs a problem regarding the insertion of the wheels, as well as the clamping cone, on the balancing shaft.

Such problem is due to reciprocal configuration of the first portion and of the second portion of the shaft.

When the second zone of the second portion is completely inserted into the first portion, the first zone of the second portion abuts against to the first portion, and no difference of the external diameter of the balancing shaft are observed.

When the second zone is extracted from the first portion, a variation of external diameter of the shaft can be observed. In particular, since the second zone has a diameter smaller than that of the first portion and that of the first zone, between the first portion and the first zone, a sort of slot is identified.

Said slot has a thickness related to the difference between the diameter of the first zone and that of second zone of the second portion, and a length related to the length of the second zone of the second portion.

When the operators position the wheels onto the balancing shaft and makes them to slide onto it, the upper edge of the central hole of the wheel-rim falls into said circumferential slot.

The upper edge of the wheel-rim slides into the slot, but when the opposite border of the circumferential slot is reached, the upper edge of the wheel-rim has to overcome the step due to the difference of the diameters of the first portion and of the second zone, then the wheel strikes the opposite border of the circumferential slot.

Therefore the further sliding of the wheel on the balancing shaft is obstructed, and then the complete insertion of the wheel on the balancing shaft is impeded. Therefore, the wheel does not abut against the aforementioned vertical flange; the same problem occurs for the clamping cone.

If the wheel does not abut against the vertical flange it is impossible the balancing operation cannot be performed.

Therefore, to overcome both of these problems, the operator must re-lift up the wheel, after it has fallen into the circumferential slot, to remove the wheel from said slot, and to reposition it directly on the first portion of the balancing shaft, so that the wheel can slide onto the first portion of the balancing shaft, thereby completing the clamping of the wheel.

The same operation must be repeated for the clamping cone.

These operations, after being repeated systematically during the workday, becomes very tiring for the operator and causes a considerable overall loss of time.

Furthermore the edge of the central hole of the wheel-rim can be damaged during the striking against the border of the slot.

A self-centering device for locking aircraft wheel rims is disclosed in US 5,074,347.

According to this US patent, the self-centering device for locking aircraft wheels rims comprises a hollow telescopic shaft on which a wheel rim is to be mounted, and which is traversed by a slidable rod with which there engages by bilateral engagement at least one coupling member which is provided at the free end of the shaft and is arranged to engage with and disengage from a sliding thrust cone which clamps the wheel rim against a backing cone.

Nevertheless, the telescopic shaft comprises two portions which are telescopically arranged and which have respective different diameters.

An apparatus for use in balancing motor vehicle and other wheels is known from US 3,636,773,

The balancing shaft of the apparatus, on which a wheel to be balanced is mounted, has only one portion on which a rim of a wheel can be inserted.

Said only one portion is slidably mounted inside a sleeve when a wheel is locked on the balancing shaft, to determinate la balancing plane and, finally, the weights to be secured on the wheel for its balancing.

One object of the invention is to improve the known apparatuses for clamping vehicle wheels on balancing machines.

Another object of the invention is to provide an apparatus for clamping vehicle wheels on balancing machines that enables to eliminate any interferences between the rims, the clamping cones, and the different portions of the balancing shaft.

Further another object is to provide an apparatus for clamping vehicle wheels on balancing machines which enables to completely insert a vehicle wheel on a balancing shaft of a balancing machine without any intervention of the operators.

These objects are all achieved by providing an apparatus, comprising a clamping group for camping a wheel of a vehicle on a balancing machine and provided with balancing shaft means having a first portion and a second portion telescopically slidable into said first portion, characterized in that said first portion and said second portion are provided with respective peripheral zones having complementary profiles and substantially the same external diameter so as to allow at least partial insertion of said second portion into said first portion and so as to allow centring of a wheel-rim thereon, and wherein said peripheral zones comprise projections protruding from said first portion and from said second portion, said projections being alternated with respective grooves in said first portion and in said second portion.

Owing to this aspect of the invention, no peripheral slot are identified on the balancing shaft, even in its extracted configuration, thus a wheel can be completely inserted onto the balancing shaft without any striking and without any intervention by the operators.

Preferably, the first portion of the balancing shaft is axially fixed and rotationally integral to a flange that supports and and on which the wheels abut.

Preferably, the second portion of the balancing shaft is forward and backward movable in relation to said first portion, with an active preset stroke, and it is operated by respective driving means.

Further characteristics and advantages of the present invention will be better highlighted from the detailed description of a preferred, but not exclusive, embodiment of a clamping unit for clamping vehicle wheels on balancing machines, which is illustrated as a nonlimitative example in the attached drawings in which:
Figure 1 is a schematic view of a known balancing shaft with telescopic portions in an extracted configuration;
Figure 2 is a schematic view of the known balancing shaft in Figure 1 in an retracted configuration;
Figure 3 is a schematic front view of the balancing shaft according to the invention, in an extracted configuration;
Figure 4 is schematic view of the balancing shaft according to the invention, in a retracted configuration;
Figure 5 is a detailed view of the reciprocal interpenetration between the two telescopic sections of the balancing shaft according to the invention.

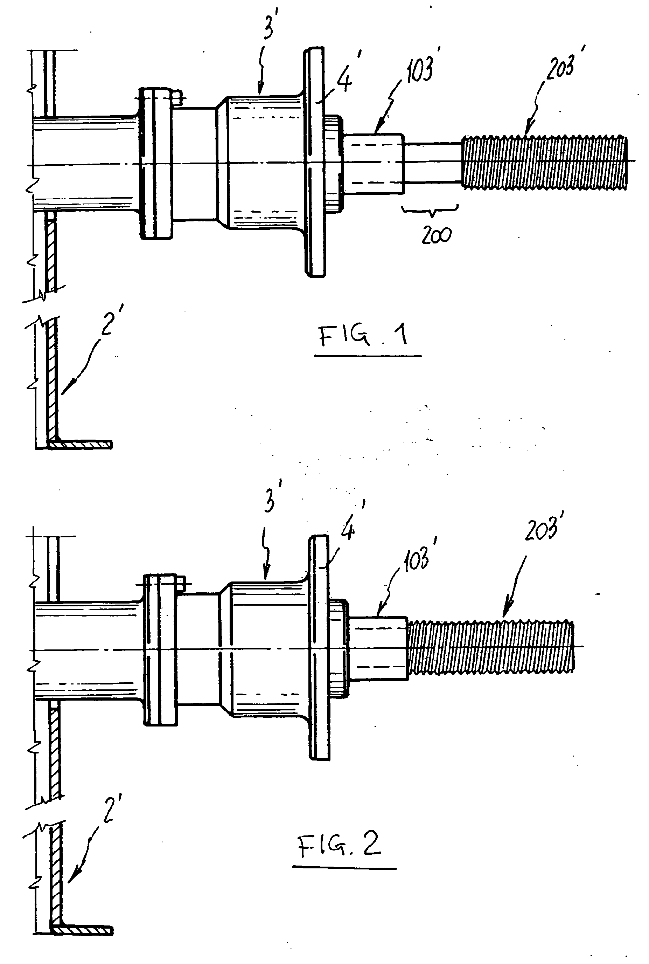

With particular reference to the Figures 1 and 2, it is shown a prior art balancing shaft 3' of a balancing machine 2'. The balancing shaft 3' comprises a first portion 103' fixed in relation to a vertical flange 4', and a second portion 203' movable into and out from the first portion 103'.

In particular the second portion 203' can be partially inserted into the first portion 103' as shown in the Figure 2, and extracted from the first portion 103' as shown in the Figure 1.

The second portion 203' comprises a threaded first zone having the same diameter as the first portion, and a second zone with a smaller diameter as the first zone, that can be inserted into the first portion.

When the second portion 203' is extracted from the first portion 103' can be observed a deep circumferential slot 200, between the first portion 103' and the second portion 203'.

When a wheel is inserted on to the balancing shaft 3' to be balanced, the upper edge of the central hole of the wheel falls into the circumferential slot 200, slide into said circumferential slot 200 till reaching an opposite border of the circumferential slot 200.

At the border of the circumferential slot 200, the wheel has to get on a step whose height depends on the diameter difference between the first portion 103 and the second zone.

Therefore the wheel strikes against this border and any further sliding of the wheel is obstructed.

To complete the insertion of the wheel on the balancing shaft 3', an operator has to lift up the wheel so as to get it on the step and to reposition the wheel on the first portion of the balancing shaft 3'.

With reference to the Figure from 3 to 5, is shown a balancing machine 2 provided with a clamping unit 1 for clamping vehicle wheels on the balancing machine 2, according to the invention.

The clamping unit 1 comprises a balancing shaft 3 having a substantially horizontal development, rotationally supported, to the balancing machine 2.

The balancing shaft 3 comprises a vertical flange 4 that supports the wheels when the wheel are mounted on the balancing shaft to be balanced, and on which the wheels abut and two telescopically joined portions.

The telescopically joined portions comprise in turn a first portion 103 that is axially fixed to and rotationally integral with the flange 4, and a second portion 203 that can be moved forward and backward in relation to said first section 103.

The second portion 203 is operated by respective driving means, not shown, and it comprises a threaded zone 205, provided with peripheral thread 5 for screwing clamping terminals 204, and an inner zone 206 suitable for being inserted into the first portion 103.

As can be better seen from the Figure 5, the first portion 103 and the inner zone 206 of the second portion 203 presents respective circumferentially complementary profiles.

In particular, on the external circumference of the inner zone 206 are obtained projections 6 alternated with relative grooves 7, whilst on the external circumference of the first portion 103 are obtained further projections 60 alternated with further grooves 70.

The projections 6 and the grooves 7 and respectively the further projections 60 and the further grooves 70 are so spaced respectively on the inner zone 206 and on the first portion 103 in such a way that when the second portion 203 is moved towards the first portion 103, the projections 6 insert into the relative further grooves 70 and the further projections 60 insert into the grooves 7.

In other words, the first portion 103 and the inner zone 206 are reciprocally interpenetrable when the second portion 203 is moved towards the first portion 103, by sliding in axial direction.

The complementary profiles are so configured as the second portion 203 can be moved towards the first portion 103 for a length at least equal to an active stroke "C".

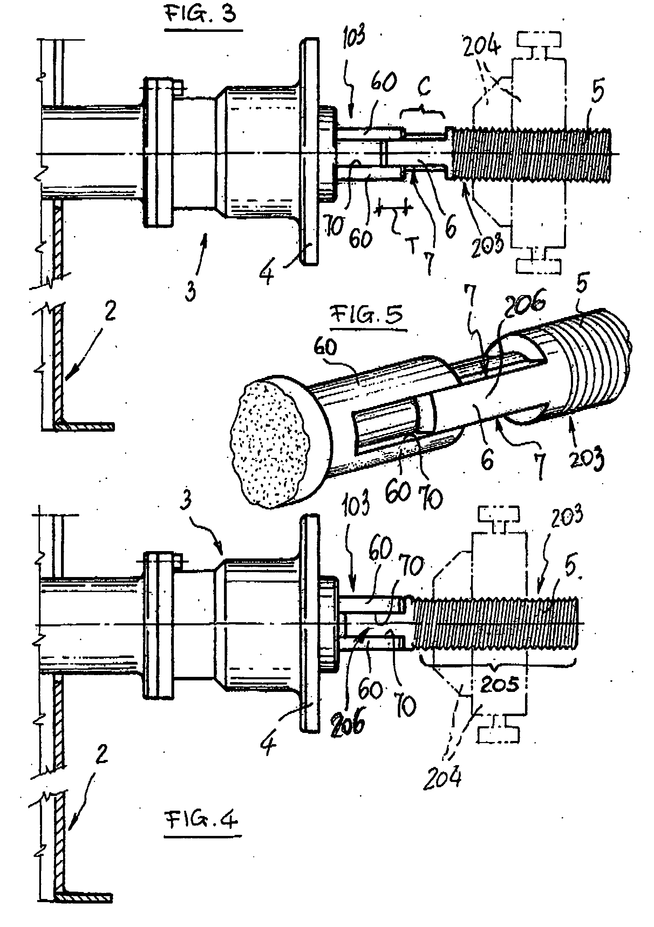

When the balancing shaft is in the extracted configuration shown in the Figure 3, the complementary profiles reciprocally interprenetate for a length "T", so that the second portion 203 cannot be disengaged from the first portion 103.

In a preferred version of the invention, are obtained two different projections 6 and two further different projections 60 that are longitudinal, substantially rectilinear, diametrically opposed to each other, and define respectively on the first portion 103 and on the inner zone 206 two correspondent grooves 7 and two correspondent further grooves 70, substantially rectilinear.

On the first portion 103 and on the inner zone 206 can be obtained a desired number of projections 6 and of further projections 60.

The projections 6 are so configured and arranged on the inner zone 206 to define an external diameter of the inner zone 206 that is equal to the diameter of the first portion 103.

In particular, the projections 6 project from the body of the inner zone 206 so that they define an outer circumference of the inner zone 206 that is equal to the outer circumference of the first portion 103.

In this way, when the operator inserts a wheel to be balanced into the balancing shaft 3, the wheel can easily slide on the balancing shaft 3 along the entire length of the balancing shaft 3, till abutting against the flange 4, without any interference or resistance occurring.

In particular, since there are no irregularities or slot on the balancing shaft 3, that can impede the sliding of the wheel or in which the central hole of the wheel can fall, the wheel can be easily shoved until the flange 4.

Similarly, even the clamping cone can be easily inserted into the balancing shaft 3, without any danger of interferences, since there are no circumferential slots on the surface of the balancing shaft 3.

In fact, the alternation and the dimensions of the grooves 7 and of the projections 6 on the inner zone 206 is such that even a portion of the border of the central hole of the rim of the wheel to be balanced engage with a portion of a projection 6 so that the central hole cannot fall into the grooves 7.

The same thing occurs for the further projection 60 and the further grooves 70.

When the balancing shaft 3 is in a retracted configuration, shown in the Figure 4, the inner portion 206 is completely coupled with the first portion 103, i.e. the projections 6 and the further projections 60 are completely inserted respectively in the further grooves 70 and the grooves 7, and they are alternated each other to define an outer circumference that is substantially equal to the outer circumference of the threaded part 205 of the second portion 203.

When a wheel has to be balanced, it is inserted into the balancing shaft 3 until it abuts against the vertical flange 4, a clamping cone is then positioned so that it engages the middle hole of the wheel-rim according to the usual procedure, a stop terminal 204, (well-known to a person skilled in the art) is screwed on the thread 5 of the second portion 203, and the second portion 203 is moved toward the first portion 103 so that the projections 6 slide into the further grooves 70 and the further projections 6 slide into the grooves 70.

After that the known balancing procedure can be executed.

At the end of the balancing operations, the wheel can be easily removed form the balancing shaft, and the inner zone 206 is extracted from the first portion 103.

## Claims

1. Apparatus, comprising a clamping group (1) for clamping a wheel of a vehicle on a balancing machine (2) and provided with balancing shaft means (3) having a first portion (103) and a second portion (203) telescopically slidable into said first portion (103), **characterized in that** said first portion (103) and said second portion (203) are provided with respective peripheral zones having complementary profiles and substantially the same external diameter so as to allow at least partial insertion of said second portion (203) into said first portion (103) and so as to allow centring of a wheel-rim thereon, and wherein said peripheral zones comprise projections (6, 60) protruding from said first portion (103) and from said second portion (203), said projections being alternated with respective grooves (7, 70) in said first portion (103) and in said second portion (203).

2. Apparatus according to claim 1, wherein said projections (6, 60) and said grooves (7, 70) are substantially rectilinear and parallel to a longitudinal axis of said balancing shaft means (3).

3. Apparatus according to claim 1, wherein said peripheral zones comprise two opposing projections (6, 60) diametrically opposed.

4. Apparatus according to claim 1, wherein said first portion (103) is axially fixed and rotationally integral to a flange (4) of the balancing shaft (3).

## Patentansprüche

1. Vorrichtung zum Einspannen eines Fahrzeugrades an einer Auswuchtmaschine (2) mit einer Einspann-Einheit (1) und mit einer Maschinenwelle (3), die ein erstes Teilstück (103) hat, sowie ein zweites Teilstück (203), das in das erste Teilstück (103) teleskopartig einschiebbar ist, **dadurch gekennzeichnet, dass** das erste Teilstück (103) und das zweite Teilstück (203) jeweils mit Umfangsbereichen komplementärer Profilgestaltung versehen sind, die im wesentlichen den selben Außendurchmesser haben, derart, dass ein mindestens teilweises Einführen des zweiten Teilstücks (203) in das erste Teilstück (103) möglich ist und auf diesen eine Zentrierung einer Radfelge erfolgen kann, wobei die genannten Umfangsbereiche Vorsprünge (6, 60) haben, die von dem ersten Teilstück (103) bzw. dem zweiten Teilstück (203) ausgehen und die genannten Vorsprünge sich jeweils mit Furchen (7, 70) des ersten Teilstücks (103) bzw. des zweiten Teilstücks (203) abwechseln.

2. Vorrichtung nach Anspruch 1, wobei die genannten Vorsprünge (6, 60) und Furchen (7, 70) sich im wesentlichen geradlinig und parallel zu einer Längsachse der genannten Welle der Auswuchtmaschine erstrecken.

3. Vorrichtung nach Anspruch 1, wobei die Umfangsbereiche 2 aufeinander zu weisende Bereiche mit Vorsprüngen (6, 60) umfassen, die diametral einander gegenüberliegend angeordnet sind.

4. Vorrichtung nach Anspruch 1, wobei das erste Teilstück (103) an einem Flansch (4) der Welle (3) der Auswuchtmaschine axial fixiert ist und mit diesem eine drehbare Einheit bildet.

## Revendications

1. Dispositif comprenant un groupe de serrage (1) destiné à bloquer une roue d'un véhicule sur une machine à équilibrer (2) et équipé de moyens d'arbre (3) d'équilibrage ayant une première section (103) et une deuxième section (203) coulissant de manière télescopique dans ladite première section (103), ***caractérisé en ce que*** ladite première section (103) et ladite deuxième section (203) comportent des zones périphériques respectives ayant des profils complémentaires et sensiblement le même diamètre extérieur afin de permettre l'insertion au moins partielle de ladite deuxième section (203) dans ladite première section (103) et afin d'y permettre le centrage d'une jante de véhicule, et dans lequel lesdites zones périphériques comprennent des éléments en saillie (6, 60) dépassant de ladite première section (103) et de ladite deuxième section (203), lesdits éléments en saillie alternant avec des gorges respectives (7, 70) dans ladite première section (103) et dans ladite deuxième section (203).

2. Dispositif selon la revendication 1, dans lequel lesdits éléments en saillie (6, 60) et lesdites gorges (7, 70) sont sensiblement rectilignes et parallèles à un axe longitudinal desdits moyens d'arbre d'équilibrage (3).

3. Dispositif selon la revendication 1, dans lequel lesdites zones périphériques comprennent deux éléments opposés en saillie (6, 60) diamétralement opposés.

4. Dispositif selon la revendication 1, dans lequel ladite première section (103) est fixée axialement sur, et solidaire en rotation d'une bride (4) de l'arbre d'équilibrage (3).
